# FASCICULE DE BREVET EUROPEEN

(11) **EP 0 795 709 B1**
(45) Date de publication et mention de la délivrance du brevet: **14.11.2001**
(21) Numéro de dépôt: 97460010.8
(22) Date de dépôt: 28.02.1997
(51) Int. Cl.: F16L 7/00

(54) **Dispositif d'aiguillage et de séparation d'une conduite, éventuellement déjà occupée par des câbles, et pousseur mécanique associé**
Weichen- und Abscheidevorrichtung bei einer Rohrleitung, die eventuell schon mit Kabeln besetzt ist, und zugehöriges mechanisches Schubgerät
Switch and separating device used with a conduit, optionally already occupied by cables, and related pushing apparatus

(30) Priorité: 15.03.1996 FR 9603482
(43) Date de publication de la demande: 17.09.1997
(73) Titulaire: FRANCE TELECOM SA, 75015 Paris (FR)
(72) Inventeur: Pecot, Alain, 22300 Lannion (FR); Lecam, Joel, 22300 Lannion (FR); Le Goff, Gérard, 22700 Louannec (FR)
(74) Mandataire: Maillet, Alain

(56) Documents cités:
- EP-A- 0 542 584
- DE-A- 3 446 125
- FR-A- 2 676 796
- US-A- 4 616 955

## Description

La présente invention concerne un dispositif et un procédé d'aiguillage, encore appelé "aiguille", destiné à former une séparation dans une conduite déjà partiellement occupée par des câbles de transmission, par exemple des câbles téléphoniques. Elle concerne également un appareil, dit "pousseur", destiné à faire avancer ledit dispositif d'aiguillage, ou "aiguille", dans la conduite.

Dans l'infrastructure génie civil du réseau national de distribution de câbles téléphoniques, télégraphiques et téléinformatiques, les conduites, comprenant des tubes ou des alvéoles, dans lesquelles sont installés les câbles des réseaux actuels, c'est-à-dire câbles multipaires en cuivre pour le téléphone, câbles coaxiaux, ces deux types de câbles étant appelés dans la suite "câbles cuivre", ou câbles à fibres optiques pour les réseaux de télédistribution, sont de plus en plus saturées au fil des extensions des réseaux.

Pour différentes raisons, il devient indispensable d'utiliser au maximum les possibilités de l'infrastructure existante. En effet, les coûts de travaux de génie civil en site urbain rendent inconcevables des projets d'une ampleur comparable à celle que l'on a connue lors des deux précédentes décennies. La règle qui prévalait d'introduire un câble unique par conduite va évoluer de façon à pouvoir utiliser l'espace restant libre dans les différentes conduites. Cette évolution est maintenant possible grâce au développement de très compacts câbles à fibres optiques, appelés dans la suite "câbles optiques", tels que les structures rubans, microgaines, ou les fibres multicoeurs, ces câbles optiques faisant quelques millimètres de diamètre alors que les câbles cuivre de l'époque précédente font quelques centimètres pour des capacités de trafic égales. Il devient donc possible d'installer ces câbles optiques de faible diamètre dans des conduites déjà partiellement occupées par des câbles plus gros. Il doit être entendu que le réseau national de distribution est répertorié, ce qui implique, entre autres, que l'état de remplissage des conduites du réseau est lui-même répertorié.

Dans une conduite vide, on sait procéder à l'aiguillage pneumatiquement, c'est-à-dire passer un filin permettant le tirage du câble au moyen d'un furet, ou piston étanche, ajusté au diamètre de la conduite. Ce n'est plus possible dans une conduite déjà occupée. Dans ce cas, les agents utilisent généralement des aiguilles en fibres de verre qu'ils introduisent dans les conduites occupées en les poussant manuellement. Ces aiguilles ont un diamètre relativement important, d'environ 20 mm, et sont composées d'éléments de 1,50 m de longueur, qui sont vissés les uns au bout des autres de façon à constituer la longueur nécessaire à l'aiguillage de la section de conduite considérée. Les longueurs reconstituées sont généralement limitées à environ 50 m. Telle qu'elle est pratiquée aujourd'hui, l'opération est longue, pénible et n'est pas toujours remplie de succès car elle dépend en grande partie de l'espace qui reste disponible dans la conduite et du frottement de l'aiguille sur les câbles déjà en place.

Le document EP-A-542 584 décrit une aiguille ainsi qu'un dispositif de poussage destiné à faire pénétrer l'aiguille dans un tube.

Le but de la présente invention consiste à prévoir un dispositif d'aiguillage, autrement dit une "aiguille", qui permet de surmonter les inconvénients mentionnés ci-dessus, de rendre plus commode l'opération d'aiguillage pour installer notamment des câbles à fibres optiques dans des conduites occupées partiellement et de donner une meilleure garantie du succès de l'opération.

L'objet de la présente invention est un dispositif d'aiguillage défini dans la revendication 1 un dispositif de poussage défini dans la revendication 7 ainsi qu'un procédé d'aiguillage défini dans la revendication 9.

Le profil de l'aiguille est prévu pour qu'elle puisse supporter des câbles optiques qui seront aussi installés dans ladite conduite.

En effet, le poussage d'une aiguille cylindrique dans une conduite déjà occupée par un ou des câbles cuivre de gros diamètre pose des problèmes de mise en oeuvre, même si l'aiguille est optimisée en diamètre, rigidité et coefficient de frottement, car son bout avant tend toujours à piquer les câbles existant par dessus. Lors du poussage d'une aiguille cylindrique, celle-ci a donc tendance à se glisser ou à s'enrouler autour du ou des câbles qui sont déjà dans la conduite. Il en résulte souvent des échecs de l'opération d'aiguillage, surtout pour une conduite de faible diamètre où le taux de remplissage, c'est-à-dire le rapport entre la section des câbles en place et la section intérieure de la conduite, est assez important. Le taux de remplissage va, par exemple, de 30 à 40 % pour une conduite de 42/45 mm de diamètre occupée par deux câbles de 10 mm de diamètre. De plus, dans le cas où le passage de l'aiguille aboutit à l'extrémité éloignée de la conduite, il y a une forte probabilité pour que l'aiguille ait fait au moins un tour autour du ou des câbles en place. Le câble optique qui va être tiré avec l'aiguille sera donc mis en place dans les mêmes conditions. Au moment de la dépose des câbles cuivre, par exemple pour vétusté, les risques d'arracher le ou les câbles optiques toujours en service seront très élevés. L'utilisation de l'aiguille profilée plate suivant l'invention permet de surmonter les inconvénients mentionnés ci-dessus, tout en garantissant la pérennité des câbles optiques à la dépose des câbles en cuivre.

Selon l'invention, l'aiguille présente, un bourrelet central longitudinal pratiquement circulaire ou ovoïde, prolongé, de part et d'autre, par deux ailes coplanaires, le diamètre du bourrelet central étant légèrement supérieur à l'épaisseur des ailes.

Le bourrelet central permet d'assurer la séparation de deux câbles optiques à installer.

suivant une autre caractéristique, le profil de l'aiguille présente, aux bouts des ailes, des bourrelets longitudinaux.

Les bourrelets aux bouts des ailes ont, de préférence, un diamètre inférieur à celui du bourrelet central et permettent d'utiliser des aiguilles dont la largeur n'est pas strictement égale au diamètre d'une conduite mais inférieure, en empêchant le passage fortuit d'un câble optique sous l'aiguille.

L'aiguille suivant l'invention permet ainsi de séparer le ou les câbles déjà en place dans la conduite de ceux qui vont être installés au cours du déploiement du nouveau réseau de fibres optiques. Après l'opération d'aiguillage, l'aiguille plate peut être conservée en place dans la conduite où elle assure un cloisonnement entre les câbles existants et ceux qui vont être installés.

Il existe déjà en exploitation des systèmes de tubage avec cloisonnement plus ou moins développés. Avec ces autres systèmes de tubage, il faut d'abord opérer l'aiguillage de la conduite avant d'installer ensuite le tubage constituant le cloisonnement par treuillage. Suivant l'invention, c'est l'aiguille, servant à l'opération d'aiguillage, qui constitue le profilé de cloisonnement et qui reste en place.

L'aiguille laissée en place pour assurer le cloisonnement permet d'enlever sans risque les câbles en cuivre installés préalablement dans la conduite et donc d'envisager facilement le basculement des services téléphoniques de base sur les nouveaux réseaux optiques, avec récupération de place dans la conduite pour augmenter les capacités de nouveaux réseaux optiques.

L'opération d'aiguillage est effectuée manuellement ou en utilisant éventuellement un pousseur mécanique.

Suivant une autre caractéristique de l'invention, il est également prévu de munir l'extrémité avant de l'aiguille, de moyens de fixation à l'aiguille permettant de fixer des extrémités avant de microtubes ou de microcâbles ou de petits câbles d'énergie, ce qui permet à l'opération d'aiguillage par poussage de l'aiguille plate d'être couplée à l'installation simultanée desdits microtubes ou microcâbles, les microtubes servent à l'installation ultérieure de microcâbles optiques, par exemple, par soufflage.

Suivant une autre caractéristique, lesdits moyens de fixation sont au nombre de deux, respectivement montés sur chaque aile du profilé.

Les efforts sur les microtubes ou microcâbles sont très faibles, ce qui permet de réduire le dimensionnement des renforts de câbles et de microtubes qui seraient nécessaires dans le cas d'une installation par treuillage. L'économie réalisée compense le coût de l'aiguille qui reste en place, notamment pour constituer un cloisonnement.

Suivant une autre caractéristique, l'aiguille est munie d'un feuillard métallique occupant toute ou pratiquement toute sa largeur.

Certains réseaux optiques, qui vont être installés dans un avenir très proche, sont basés sur l'installation, dans ledit réseau, d'équipements optoélectroniques qu'il faut alimenter en énergie. L'aiguille suivant l'invention permet d'installer de petits câbles d'énergie dans les conduites occupées. Dans ce cas, il faut considérer les problèmes de perturbations électromagnétiques ou parasites dûs à la proximité des câbles d'énergie et des câbles de télécommunications en cuivre. Il faut donc prévoir d'isoler les ondes électromagnétiques créées par le transport de l'énergie, c'est-à-dire du courant électrique basse tension. On pourrait prévoir d'utiliser des câbles blindés mais ils sont onéreux et pondéreux. Avec avantage, on peut résoudre ce problème d'isolation en utilisant une aiguille suivant l'invention munie d'un feuillard métallique dans sa plus grande largeur de façon à constituer un écran électromégnétique.

Suivant une autre caractéristique, l'aiguille est réalisée par extrusion d'une matière plastique, de préférence en PVC.

Le PVC a l'avantage d'avoir un faible coefficient de frottement et de bonnes caractéristiques mécaniques, tout en étant d'un coût réduit.

Selon l'invention il est également prévu un appareil, dit "pousseur", destiné à pousser une aiguille suivant l'invention afin de mettre en oeuvre une opération d'aiguillage dans une conduite, l'appareil comportant deux courroies transporteuses ayant respectivement deux segments sensiblement horizontaux et égaux, de même vitesse de translation qui sont rapprochés et serrés contre les faces supérieure et inférieure du profilé de l'aiguille afin d'entraîner celle-ci en translation, c'est-à-dire de la pousser.

La section transversale de chaque courroie transporteuse comporte, autour d'une gorge destinée à loger le bourrelet central de l'aiguille, deux surfaces coplanaires dont la largeur correspond à celle de l'aiguille.

L'intérêt du pousseur tient, en particulier, au fait que la forme plate de l'aiguille, suivant l'invention, avec ses faces planes supérieures et inférieures associées aux surfaces planes des courroies transporteuses, permet à ces dernières, une fois serrées contre l'aiguille, d'exercer une poussée très efficace, ce qui n'est pas possible avec une aiguille de forme cylindrique.

Suivant une autre caractéristique, le pousseur est constitué d'un carter dans lequel sont montés par coulissement deux châssis de cassette, chaque courroie transporteuse étant, avec ses galets et son pignon moteur, montée dans le châssis d'une cassette, les châssis étant montés de manière que les parties actives des courroies transporteuses se font face, des moyens étant prévus dans le carter pour effectuer le serrage desdites courroies.

Les caractéristiques de l'invention mentionnées ci-dessus, ainsi que d'autres, apparaîtront plus clairement à la lecture de la description suivante d'exemples de réalisation suivant l'invention, ladite description étant faite en relation avec les dessins joints, parmi lesquels:
la Fig. 1 est une vue en perspective d'un dispositif d'aiguillage ou d'une "aiguille" suivant l'invention,
la Fig. 2 est une vue schématique en perspective illustrant l'utilisation de l'aiguille de la Fig. 1 dans une conduite déjà partiellement occupée,
la Fig. 3 est une vue schématique en coupe illustrant une opération d'aiguillage dans une conduite,
la Fig. 4 est une vue à plus grande échelle du bout avant de l'aiguille avançant dans une conduite,
la Fig. 5 est une vue schématique en élévation d'un premier exemple de réalisation d'un pousseur destiné à pousser une aiguille suivant l'invention,
la Fig. 6 est une vue schématique en élévation d'un second exemple de réalisation d'un pousseur, et
la Fig. 7 est une vue schématique en perspective du pousseur de la Fig. 6, en partie démonté.

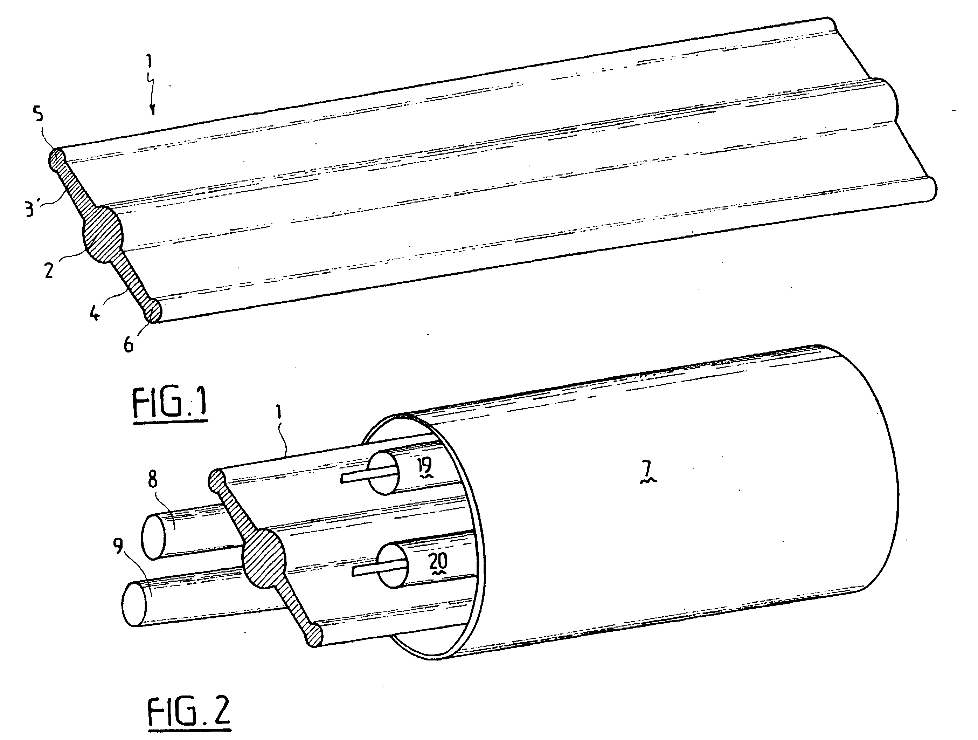

L'aiguille 1 de la Fig. 1 est un profilé relativement plat dont la section transversale comprend un bourrelet central 2 d'allure circulaire prolongé, de part et d'autre, par deux ailes symétriques 3 et 4 qui sont respectivement terminées par deux bourrelets 5 et 6. Les ailes 3 et 4 ont une épaisseur constante inférieure au diamètre du bourrelet central 2. Elles peuvent aussi, comme le montre la Fig. 1, aller en s'amincissant légèrement du centre vers l'extrémité. Les bourrelets 5 et 6 sont circulaires, avec un diamètre légèrement supérieur à l'épaisseur des ailes à leurs extrémités.

L'aiguille 1 est réalisée, de préférence, par extrusion d'une matière plastique, telle que du PVC. Mais l'aiguille 1 pourrait être réalisée en tout autre matériau qui peut être extrudé, tel que les polyoléfines PEHD ou PP.

La largeur totale de l'aiguille 1 est choisie en fonction du diamètre intérieur de la conduite qu'elle doit équiper. Obtenue directement par la forme de la filière d'extrusion, la forme structurelle de l'aiguille 1, avec son bourrelet central 2, ses ailes 3 et 4, et ses bourrelets 5 et 6, est telle qu'elle présente une grande rigidité, dans la direction des ailes, alors que, dans le plan perpendiculaire à cette direction, la rigidité est assez faible pour pouvoir conditionner, après son extrusion, l'aiguille en bobine de faible encombrement.

Il faut noter que les deux bourrelets 5 et 6 facilitent le frottement de l'aiguille le long d'une conduite. Le bourrelet central 2 contribue notamment à la rigidité de l'ensemble. A titre d'exemple, il est aussi possible d'utiliser au centre des bourrelets 2, 5 ou 6 un dispositif porteur cylindrique en matériaux composites, d'une très grande rigidité afin de réaliser les trois bourrelets. L'aiguille serait obtenue, dans ce cas, par extrusion sur ces porteurs.

Il faut encore noter que le bourrelet central 2, en coopération éventuelle avec un ou les bourrelets 5 et 6, permet de mieux loger ou caler les câbles optiques sur la face supérieure de l'aiguille, comme le montre la Fig. 2.

La Fig. 2 montre, en perspective, une conduite 7 dans laquelle sont déjà logés deux câbles cuivre 8 et 9 qui occupent la partie inférieure de la conduite 7, au-dessous d'une aiguille 1.

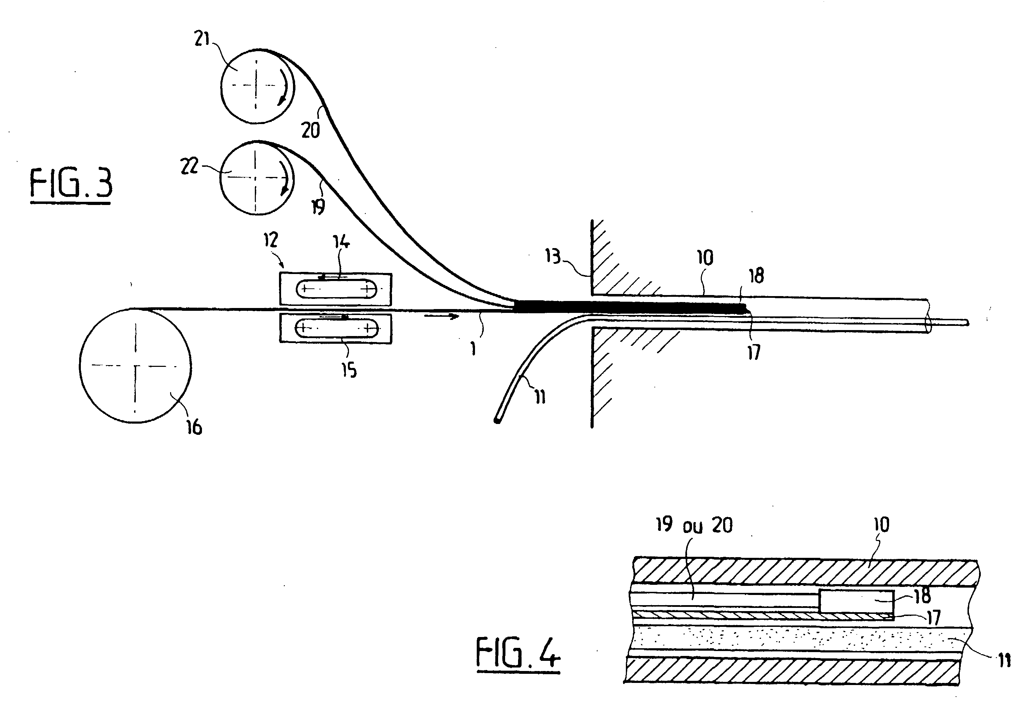

La vue schématique de la Fig. 3 montre, en coupe, une conduite 10 dans laquelle sont initialement en place des câbles cuivre 11 qui occupent moins de 50 % de la section transversale de la conduite, comme les câbles 8 et 9 de la conduite 7. Au-dessus de ces câbles 11, une aiguille 1, suivant l'invention, est poussée dans la conduite 10 au moyen d'un pousseur mécanique 12 placé devant l'entrée 13 de la conduite 10.

Comme le montre la Fig. 3, le pousseur 12 comporte deux courroies transporteuses 14 et 15 entre lesquelles passe l'aiguille 1 provenant d'une bobine d'alimentation 16 disposée en amont du pousseur 12. Les courroies 14 et 15 sont pressées l'une vers l'autre par des dispositifs à ressort, non montrés, et sont mises en mouvement par un moteur, non montré, de façon à entraîner l'aiguille 1 dans le sens allant de la bobine 16 vers la conduite 10. Des flèches F indiquent les sens de rotation des courroies 14 et 15. Les profils des courroies 14 et 15 épousent convenablement les formes des faces inférieure et supérieure de l'aiguille 1, de façon à bien répartir les efforts d'entraînement sur les deux faces de l'aiguille.

Comme le montre encore la Fig. 3 et, à plus grande échelle, la Fig. 4, le bout avant 17 de l'aiguille 1 supporte des moyens de fixation 18 qui servent à accrocher les extrémités avant de microtubes 19 et 20 qui sont, à titre d'exemple, également montrés à la Fig. 2. On a représenté des microtubes, tels que 19 et 20, car ce sont des microconduites dans lesquelles peuvent être installés, par soufflage traditionnel, des câbles optiques, mais ces microtubes pourraient être remplacés par des microcâbles optiques ou électriques, comme le mentionne le préambule de la description.

Les moyens de fixation 18 peuvent être constitués d'un ou de deux manchons dont un bout avant fermé est fixé au bout avant 17 par collage, agrafage ou un autre procédé simple et adéquat, et dans lequel sont introduites les extrémités des microtubes où elles sont fixées par collage, etc.

A la Fig. 3, l'aiguille 1 avance dans la conduite 10 sous à l'action de poussée du pousseur 12, avec son bout avant 17 muni de moyens 18 qui traînent les microtubes 19 et 20 qui se déroulent de deux bobines 21 et 22 pour se placer sur l'aiguille 1, de part et d'autre du bourrelet 2 de l'aiguille, comme le montre la Fig. 2. On installe ainsi facilement des microtubes ou des microcâbles.

Indépendamment de l'utilisation mentionnée ci-dessus de l'aiguille plate de l'invention, utilisation qui suppose que l'aiguille une fois poussée dans la conduite reste en place et sert de support à des microtubes ou microcâbles, il peut toujours être envisagé de retirer classiquement l'aiguille après l'opération d'aiguillage.

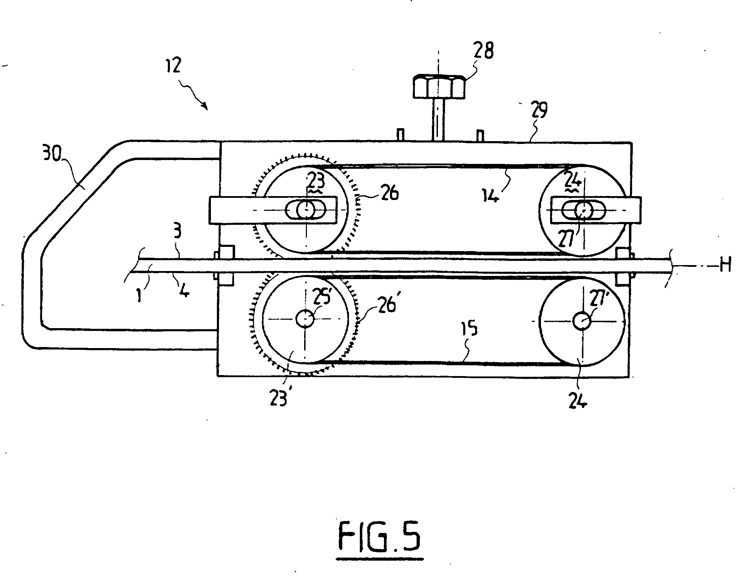

La Fig. 5 montre plus en détail le pousseur 12 de la Fig. 3, avec ses courroies transporteuses 14 et 15. La courroie supérieure 14 est guidée par deux galets 23 et 24 tournant autour d'axes horizontaux, le galet 23 est le galet moteur dont l'axe fixe 25 est entraîné par un pignon denté 26. L'axe 27 du galet 24 peut être déplacé horizontalement pour assurer la tension correcte de la courroie 14, par des moyens classiques.

Associés à la courroie inférieure 15 symétrique de la courroie 14 par rapport à une horizontale H, on retrouve les deux galets 23' et 24' tournant sur des axes 25' et 27', l'axe fixe 25' étant entraîné par un pignon denté 26', lequel engrène le pignon 26 qui est lui entraîné en rotation par un réducteur variable de vitesse, non montré, entraîné par un moteur, non montré, qui est, de préférence, un moteur électrique alimenté sous 24 V en courant continu. Une vis de réglage 28 montée sur le carter 29, dans lequel sont montés tous les éléments 23 à 26', pour serrer les branches horizontales des courroies 14 et 15 contre respectivement les faces supérieure et inférieure des ailes 3 et 4 d'une aiguille 1 placées entre les deux courroies.

Le carter 29 est muni d'au moins une poignée 30 qui permet à l'utilisateur de positionner le pousseur 12 de manière à pouvoir faire avancer l'aiguille 1 dans une conduite et absorber la force de réaction de l'aiguille provoquée par des frottements divers. La poignée 30 peut aussi être accrochée à un support solidaire de la conduite.

A titre indicatif, les dimensions approximatives du pousseur 12 peuvent être les suivantes: longueur, 220 mm; hauteur, 150 mm; épaisseur, 100 mm. Le moteur du pousseur permet de développer un effort de poussage de 20 à 25 daN environ, à une vitesse qui peut être modulée entre 0 et 25 m/min.

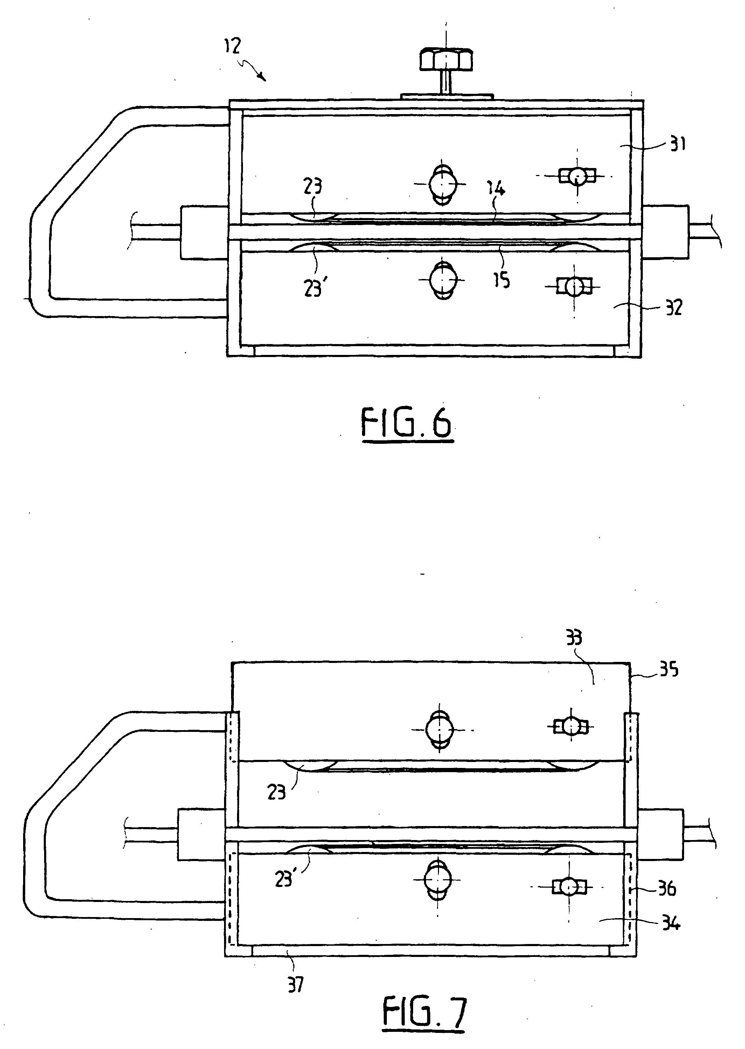

La Fig. 6 montre une autre exemple de réalisation du pousseur 12. Dans cet exemple, chaque courroie 14 ou 15 est, avec ses composants associés, montée dans une cassette 31 ou 32. Les cassettes 31 et 32 sont symétriques par rapport à une ligne horizontale H.

Comme le montre la Fig. 7, leurs châssis rectangulaires 33 ou 34 sont pourvus de languettes verticales 35 et 36, sur leurs côtés verticaux, qui peuvent glisser dans des rainures verticales prévues à cet effet dans les parois verticales d'un carter 37, analogue au carter 29.

Quand elles sont en place, c'est-à-dire placées l'une au-dessus de l'autre, puis serrées l'une contre l'autre, les pignons 26 et 26' des galets 23 et 23' des cassettes 31 et 32 respectivement sont entraînés par des pignons, non montrés, qui sont fixes par rapport au carter 37 et qui leur sont respectivement associés, ces pignons étant, au moins pour l'un d'entre eux, entraînés indirectement par un moteur électrique.

L'aménagement des courroies dans des cassettes individuelles procurent une grande souplesse dans l'emploi: possibilité de prévoir des cassettes munies de courroies de différentes largeurs ou de profils différents correspondant à des profils différents d'aiguille; possibilité d'échanger les cassettes, tout en utilisant le même carter de pousseur; possibilité de procéder éventuellement à des réparations de courroies.

## Revendications

1. Dispositif d'aiguillage, encore appelé "aiguille", destiné à être utilisé dans une conduite prévue pour câbles de télécommunications, éventuellement occupée partiellement par des câbles de transmission, tels que des câbles téléphoniques classiques, **caractérisé en ce que** l'aiguille (1) est constituée d'un profilé plat rigide de largeur constante, le profil de l'aiguille (1) présentant un bourrelet central longitudinal (2), pratiquement circulaire ou ovoïde, prolongée, de part et d'autre, par deux ailes coplanaires (3, 4), le diamètre du bourrelet central (2) étant légèrement supérieur à l'épaisseur de ailes (3, 4).

2. Le Dispositif d'aiguillage, encore appelé "aiguille", suivant la revendication 1, **caractérisé en ce que** le profil de l'aiguille (1) présente, aux bouts de ailes (3, 4), des bourrelets cylindriques longitudinaux (5, 6).

3. Dispositif d'aiguillage, encore appelé "aiguille", suivant la revendication 1 ou 2, **caractérisé en ce que** l'extrémité avant (17) de l'aiguille (1) est munie de moyens de fixation (18) montés sur l'aiguille (1) et permettant de fixer des extrémités avant de microtubes (19, 20) ou de microcâbles ou de petits câbles d'énergie.

4. Dispositif d'aiguillage, encore appelé "aiguille", suivant la revendication 3, **caractérisé en ce que** lesdits moyens de fixation (18) sont au nombre de deux, respectivement montés sur chaque aile (3 ou 4) du profilé de l'aiguille (1).

5. Dispositif d'aiguillage, encore appelé "aiguille", suivant l'une des revendications 1 à 4, **caractérisé en ce que** l'aiguille (1) est munie d'un feuillard métallique occupant toute ou pratiquement toute sa largeur.

6. Dispositif d'aiguillage, encore appelé "aiguille", suivant l'une des revendications 1 à 5, **caractérisé en ce que** l'aiguille (1) est réalisée par extrusion d'une matière plastique, de préférence en PVC.

7. Appareil, dit "pousseur", destiné à pousser un dispositif d'aiguillage ou une aiguille suivant l'une des revendications 1 à 6, afin de mettre en oeuvre une opération d'aiguillage dans une conduite, comportant deux courroies transporteuses (14, 15) ayant respectivement deux segments sensiblement horizontaux et égaux, de même vitesse de translation qui sont rapprochés et serrés contre les faces supérieure et inférieure du profilé de l'aiguille afin d'entraîner celle-ci en translation, c'est-à-dire de la pousser, **caractérisé en ce que** la section transversale de chaque courroie transporteuse (14, 15) comporte, autour d'une gorge destinée à loger le bourrelet central de l'aiguille, deux surfaces coplanaires dont la largeur correspond à celle de l'aiguille.

8. Appareil suivant la revendication 7, **caractérisé en ce que** le pousseur est constitué d'un carter (29) dans lequel sont montés par coulissement deux châssis de cassette, chaque courroie transporteuse (14, 15) étant, avec ses galets et son pignon moteur, montée dans le châssis d'une cassette, les châssis étant montés de manière que les parties actives des courroies transporteuses se font face, des moyens étant prévus dans le carter (29) pour effectuer le serrage desdites courroies.

9. Procédé d'aiguillage dans une conduite prévue pour câbles de télécommunications, éventuellement occupée partiellement par des câbles de transmission, tels que des câbles téléphoniques classiques, **caractérisé en ce que** l'on utilise comme aiguille un profilé plat rigide de largeur constante, inférieure au diamètre intérieur de ladite conduite, mais la plus voisine possible de celui-ci présentant un bourrelet central longitudinal (2), pratiquement circulaire ou ovoïde, prolongée, de part et d'autre, par deux ailes coplanaires (3, 4), le diamètre du bourrelet central (2) étant légèrement supérieur à l'épaisseur des ailes (3, 4) et que ladite aiguille est introduite par poussage au-dessus des câbles existants dans ladite conduite.

10. Procédé d'aiguillage selon la revendication 9, **caractérisé en ce que** l'aiguille est laissée sur place après son introduction dans la conduite de manière à constituer un profilé de cloisonnement.

11. Procédé d'aiguillage selon la revendication 9 ou 10, **caractérisé en ce que** l'aiguille a la structure revendiquée dans les revendications 1 à 6.

12. Procédé d'aiguillage selon la revendication 11, l'aiguille ayant la structure revendiquée en revendication 3, **caractérisé en ce que** lesdits micro-tubes ou microcâbles sont installés conjointement et simultanément au poussage de l'aiguille.

## Patentansprüche

1. Führungsvorrichtung, auch "Weiche" genannt, die dafür vorgesehen ist, in einer für Telekommunikationskabel vorgesehenen Rohrleitung erwendet zu werden, die eventuell teilweise mit Übertragungskabeln, wie herkömmlichen Telefonkabeln, belegt ist, **dadurch gekennzeichnet, dass** die Weiche (1) aus einem steifen flachen Profilteil mit konstanter Breite besteht, wobei das Profil der Weiche (1) einen praktisch kreisförmigen oder ovalen, in Längsrichtung verlaufenden Wulst (2) aufweist, der beiderseits durch zwei koplanare Flügel (3, 4) verlängert ist, wobei der Durchmesser des mittleren Wulstes (2) leicht größer als die Dicke der Flügel (3, 4) ist.

2. Führungsvorrichtung, auch "Weiche" genannt, nach Anspruch 1, **dadurch gekennzeichnet, dass** das Profil der Weiche (1) an den Enden der Flügel (3, 4) in Längsrichtung verlaufende, zylindrische Wülste (5, 6) aufweist.

3. Führungsvorrichtung, auch "Weiche" genannt, nach Anspruch 1 oder 2, **dadurch gekennzeichnet, dass** das vordere Ende (17) der Weiche (1) mit Befestigungsmitteln (18) versehen ist, die an der Weiche (1) angebracht sind und gestatten, vordere Enden von Mikroröhren (19, 20) oder Mikrokabeln oder Schwachstromkabeln zu befestigen.

4. Führungsvorrichtung, auch "Weiche" genannt, nach Anspruch 3, **dadurch gekennzeichnet, dass** es zwei Befestigungsmittel (18) sind, die entsprechend an jedem Flügel (3 oder 4) des Profilteils der Weiche (1) angebracht sind.

5. Führungsvorrichtung, auch "Weiche" genannt, nach einem der Ansprüche 1 bis 4, **dadurch gekennzeichnet, dass** die Weiche (1) mit einem Metallband versehen ist, das ihre ganze oder praktisch ihre ganze Breite einnimmt.

6. Führungsvorrichtung, auch "Weiche" genannt, nach einem der Ansprüche 1 bis 5, **dadurch gekennzeichnet, dass** die Weiche (1) durch Extrusion eines Kunststoffsmaterials, vorzugsweise von PVC, hergestellt ist.

7. Vorrichtung, "Schubgerät" genannt, die dafür vorgesehen ist, eine Führungsvorrichtung oder eine Weiche nach einem der Ansprüche 1 bis 6 zu schieben, um einen Führungsvorgang in einer Rohrleitung durchzuführen, welche Vorrichtung zwei Transportbänder (14, 15) mit entsprechend zwei im wesentlichen horizontalen und gleichen Segmenten mit der gleichen Bewegungsgeschwindigkeit umfasst, die den Ober- und Unterseiten des Profilteils der Weiche angenähert und gegen sie gedrückt werden, um diese zu einer Fahrbewegung anzutreiben, d.h. sie zu schieben, **dadurch gekennzeichnet, dass** der Querschnitt jedes Transportbandes (14, 15) um eine Rille herum, die dafür vorgesehen ist, den mittleren Wulst der Weiche aufzunehmen, zwei koplanare Oberflächen aufweist, deren Breite derjenigen der Weiche entspricht.

8. Vorrichtung nach Anspruch 7, **dadurch gekennzeichnet, dass** das Schubgerät aus einem Gehäuse (29) besteht, in welchem gleitend zwei Kassettenrahmen angebracht sind, wobei jedes Transportband (14, 15) mit seinen Rollen und seinem antreibenden Zahnrad im Rahmen einer Kassette angebracht ist, wobei die Rahmen so angebracht sind, dass sich die aktiven Teile der Transportbänder gegenüber liegen, wobei im Gehäuse (29) Mittel vorgesehen sind, um das Andrücken der Bänder auszuführen.

9. Führungsverfahren in einer für Telekommunikationskabel vorgesehenen Rohrleitung, die eventuell teilweise mit Übertragungskabeln, wie herkömmlichen Telefonkabeln, belegt ist, **dadurch gekennzeichnet, dass** als Weiche ein steifes flaches Profilteil mit konstanter Breite, die kleiner als der Innendurchmesser der Rohrleitung ist aber so nahe wie möglich bei diesem liegt, verwendet wird, das einen praktisch kreisförmigen oder ovalen, in Längsrichtung verlaufenden Wulst (2) aufweist, der beiderseits durch zwei koplanare Flügel (3, 4) verlängert ist, wobei der Durchmesser des mittleren Wulstes (2) leicht größer als die Dicke der Flügel (3, 4) ist, und dass die Weiche durch Schieben über die vorhandenen Kabel in die Rohrleitung eingeführt wird.

10. Führungsverfahren nach Anspruch 9, **dadurch gekennzeichnet, dass** die Weiche nach ihrer Einführung in die Rohrleitung installiert bleibt, so dass ein Profilteil zur Unterteilung gebildet wird.

11. Führungsverfahren nach Anspruch 9 oder 10, **dadurch gekennzeichnet, dass** die Weiche den Aufbau hat, der in den Ansprüchen 1 bis 6 beansprucht ist.

12. Führungsverfahren nach Anspruch 11, wobei die Weiche den Aufbau hat, der in Anspruch 3 beansprucht ist, **dadurch gekennzeichnet, dass** die Mikroröhren oder Mikrokabel gemeinsam und gleichzeitig mit dem Schieben der Weiche installiert werden.

## Claims

1. Switching device, also called a "switch", intended to be used in a conduit provided for telecommunications cables, possibly partially occupied by transmission cables such as standard telephone cables, **characterised in that** the switch (1) is made up of a rigid flat section of constant width, the profile of the switch (1) having a practically circular or ovoid central longitudinal bead (2), extended on each side by two coplanar wings (3, 4), the diameter of the central bead (2) being slightly greater than the thickness of the wings (3, 4).

2. Switching device, also called a "switch", according to claim 1, **characterised in that** the profile of the switch (1) has, at the ends of wings (3, 4), longitudinal cylindrical beads (5, 6).

3. Switching device, also called a "switch", according to claim 1 or 2, **characterised in that** that the front end (17) of the switch (1) is equipped with fixing means (18) mounted on the switch (1) and making it possible to fasten the front ends of microtubes (19, 20) or of microcables or of small power cables.

4. Switching device, also called a "switch", according to claim 3, **characterised in that** said fixing means (18) are two in number, respectively mounted on each wing (3 or 4) of the section of the switch (1).

5. Switching device, also called a "switch", according to one of claims 1 to 4, **characterised in that** the switch (1) is provided with a metal strip occupying all or practically all its width.

6. Switching device, also called a "switch", according to one of claims 1 to 5, **characterised in that** the switch (1) is realised by extrusion of a plastics material, preferably in PVC.

7. Apparatus, termed a "pusher", intended to push a switching device or a switch according to one of claims 1 to 6, in order to implement a switching operation in a conduit, comprising two conveyor belts (14, 15) having respectively two substantially horizontal and equal segments, which have the same running speed and are placed beside and tightened against the upper and lower faces of the section of the switch so as to drive the latter in translation, i.e. to push it, **characterised in that** the cross section of each conveyor belt (14, 15) comprises, around a groove intended to accommodate the central bead of the switch, two coplanar surfaces, the width of which corresponds to that of the switch.

8. Apparatus according to claim 7, **characterised in that** the pushing apparatus is made up of a housing (29) in which two cassette frames are mounted by sliding, each conveyor belt (14, 15), with its rollers and its pinion gear, being mounted in the frame of a cassette, the frames being assembled so that the active parts of the conveyor belts face one another, means being provided in the casing (29) to accomplish the tightening of said belts.

9. Method of switching in a conduit provided for telecommunications cables, possibly partially occupied by transmission cables, such as standard telephone cables, **characterised in that** as the switch is used a flat rigid section of constant width, smaller than the interior diameter of said conduit but as close as possible to the latter, having a practically circular or ovoid central longitudinal bead (2), extended on each side by two coplanar wings (3, 4), the diameter of the central bead (2) being slightly greater than the thickness of the wings (3, 4), and **in that** said switch is introduced by pushing above the existing cables in said conduit.

10. Method of switching according to claim 9, **characterised in that** the switch is left in place after being introduced into the conduit so as to constitute a partitioning section.

11. Method of switching according to claim 9 or 10, **characterised in that** the switch has the structure claimed in claims 1 to 6.

12. Method of switching according to claim 11, the switch having the structure claimed in claim 3, **characterised in that** said microtubes or microcables are installed jointly and simultaneously with the pushing of the switch.
